# EUROPEAN PATENT SPECIFICATION

(11) **EP 4 039 741 B1**
(45) Date of publication and mention of the grant of the patent: **20.11.2024**
(21) Application number: 20872159.7
(22) Date of filing: 30.09.2020
(51) Int. Cl.: B60C 1/00, C08L 9/06, C08L 7/00, B62D 55/253, B65G 15/34, C08K 3/105, C08K 3/11, C08K 5/098, C08K 5/52, C08K 5/521, C08K 5/55

(54) **RUBBER COMPOSITION, RUBBER-METAL COMPOSITE, CONVEYOR BELT, HOSE, CRAWLER, AND TIRE**
KAUTSCHUKZUSAMMENSETZUNG, GUMMI-METALLVERBUNDMATERIAL, FÖRDERBAND, SCHLAUCH, RAUPENKETTE UND REIFEN
COMPOSITION DE CAOUTCHOUC, COMPOSITE CAOUTCHOUC-METAL, COURROIE TRANSPORTEUSE, TUYAU SOUPLE, CHENILLE ET PNEUMATIQUE

(30) Priority: 30.09.2019 JP 2019180395; 30.09.2019 JP 2019180382
(43) Date of publication of application: 10.08.2022
(73) Proprietor: BRIDGESTONE CORPORATION, Chuo-ku Tokyo 104-8340 (JP)
(72) Inventor: TETSUTANI Hisashi, Tokyo 104-8340 (JP); TAKAHASHI Yuwa, Tokyo 104-8340 (JP)
(74) Representative: Marks & Clerk LLP
(86) International application number: PCT/JP2020/037325
(87) International publication number: WO 2021/066072

(56) References cited:
- EP-A1- 3 192 830
- EP-A1- 3 196 243
- EP-A2- 0 455 448
- WO-A1-2016/039375
- JP-A- 2004 359 829
- JP-A- 2011 219 507
- JP-A- 2016 515 149

## Description

### TECHNICAL FIELD

This disclosure relates to a rubber composition, a rubber-metal composite, a conveyor belt, a hose, a crawler, and a tire.

### BACKGROUND

A reinforcing material such as a brass-plated steel cord, for example, is coated with rubber to improve the performance of automobile tires, conveyor belts, and the like. Further, it is known that an adhesion promoter is contained in the rubber to improve the adhesive force between the above-mentioned reinforcing material and a natural rubber or synthetic rubber. Cobalt salts of organic acid (such as cobalt stearate, cobalt naphthenate, tall oil fatty acid cobalt, and cobalt boron metal soap) and the like are generally used as this adhesion promoter because they can improve the adhesiveness between a metal member such as a steel cord and a rubber.

In recent years, however, there have been environmental regulations such as the Registration, Evaluation, Authorization and Restriction of Chemicals (REACH) in Europe, and the above-mentioned cobalt salt of organic acid used as an adhesion promoter is also listed as a candidate in regulation such as the REACH.

Therefore, it has been desired to develop a non-cobalt-based adhesion promoter.

For example, WO/2016/039375 (PTL 1) describes an adhesion promoter capable of exerting a high adhesive force between a rubber and a metal even if no cobalt is contained, and a technique relating to a rubber composition and a tire using this adhesive promoter.

According to the technique of PTL 1, it is possible to realize a certain degree of rubber-metal adhesiveness even if no cobalt is contained.

### CITATION LIST

### Patent Literature

PTL 1: WO/2016/039375

### SUMMARY

### (Technical Problem)

However, when the promoter described in PTL 1 is used for a rubber-metal composite in a tire, a conveyor belt or the like, the rubber-metal adhesiveness is insufficient as compared with a case where cobalt is used. It has been desired to develop a technique capable of realizing better rubber-metal adhesiveness.

It could thus be helpful to provide a rubber composition having excellent adhesiveness to a metal member even if no cobalt salt is contained.

It is also helpful to provide a rubber-metal composite, a conveyor belt, a hose, a crawler and a tire having excellent rubber-metal adhesiveness even if no cobalt salt is contained.

### (Solution to Problem)

We thus provide the following.

The rubber composition of the present disclosure is a rubber composition containing a rubber component, a rubber-metal adhesion promoter containing Bi, and an organic acid salt of metal other than Bi, wherein
a content of metal element other than Bi with respect to a content of Bi element (content of metal element other than Bi/content of Bi element) in the rubber composition is more than 14 and 100 or less in terms of molar ratio, and
a content of the rubber-metal adhesion promoter is more than 1.5 parts by mass with respect to 100 parts by mass of the rubber component, and the amount of substance of metal element other than Bi contained in the organic acid salt of metal other than Bi in the rubber composition is 0.01 mol or more.

With the above configuration, excellent adhesiveness to a metal member can be realized even if no cobalt salt is contained.

In the rubber composition of the present disclosure, the rubber-metal adhesion promoter preferably contains at least one selected from (1) a Bi salt of an aliphatic carboxylic acid having 2 to 25 carbon atoms and (2) a compound represented by the following formula (A). In this way, better adhesiveness to a metal member can be realized.

In the rubber composition of the present disclosure, the metal other than Bi is preferably at least one selected from the group consisting of Zn, Al, Mo, Fe, Ti, and Cu, and it is more preferably Zn. In this way, better adhesiveness to a metal member can be realized.

In the rubber composition of the present disclosure, a content of the organic acid salt of metal other than Bi is preferably 0.05 parts by mass or more and 15 parts by mass or less with respect to 100 parts by mass of the rubber component. In this way, deterioration of the rubber composition can be suppressed while realizing better adhesiveness to a metal member.

In the rubber composition of the present disclosure, the organic acid salt of metal other than Bi is preferably at least one selected from zinc 2-ethylhexanoate and zinc dimethacrylate. In this way, better adhesiveness to a metal member can be realized.

In the rubber composition of the present disclosure, the amount of substance of the Bi element in the rubber composition is preferably more than 0.007 mol and less than 0.02 mol. In this way, deterioration of the rubber composition can be suppressed while realizing better adhesiveness to a metal member.

In the rubber composition of the present disclosure, a content of the rubber-metal adhesion promoter is preferably more than 1.5 parts by mass and 25 parts by mass or less with respect to 100 parts by mass of the rubber component. In this way, deterioration of the rubber composition can be suppressed while realizing better adhesiveness to a metal member.

The rubber composition of the present disclosure further contains a zinc compound other than the metal salt of organic acid, and a total content of the zinc compound and the organic acid salt of Zn is preferably 17 parts by mass or more and 30 parts by mass or less with respect to 100 parts by mass of the rubber component. In this way, deterioration of the rubber composition can be suppressed while realizing better adhesiveness to a metal member.

In the rubber composition of the present disclosure, the carboxylic acid in the (1) Bi salt of an aliphatic carboxylic acid having 2 to 25 carbon atoms is preferably an aliphatic monocarboxylic acid or an aliphatic dicarboxylic acid, it is more preferably a saturated aliphatic monocarboxylic acid having 2 to 20 carbon atoms, and it is particularly preferably 2-ethylhexanoic acid, neodecanoic acid, or octadecanoic acid. In this way, better adhesiveness to a metal member can be realized.

In the rubber composition of the present disclosure, Z in the (2) compound represented by the formula (A) preferably has the structure of the formula (z-1). In this way, better adhesiveness to a metal member can be realized.

In the rubber composition of the present disclosure, (RCOO) in the (2) compound represented by the formula (A) is preferably a residue of a saturated aliphatic monocarboxylic acid having 2 to 20 carbon atoms, and it is more preferably a residue of 2-ethylhexanoic acid, a residue of neodecanoic acid, a residue of hexadecanoic acid, or a residue of octadecanoic acid. In this way, better adhesiveness to a metal member can be realized.

The rubber-metal composite of the present disclosure comprises the rubber composition of the present disclosure described above and a metal member.

With the above configuration, excellent rubber-metal adhesiveness can be realized even if no cobalt salt is contained.

In the rubber-metal composite of the present disclosure, the metal member is preferably galvanized. This can provide better rubber-metal adhesiveness.

The conveyor belt of the present disclosure uses the rubber-metal composite of the present disclosure described above.

With the above configuration, excellent rubber-metal adhesiveness can be realized even if no cobalt salt is contained.

The hose of the present disclosure uses the rubber-metal composite of the present disclosure described above.

With the above configuration, excellent rubber-metal adhesiveness can be realized even if no cobalt salt is contained.

The crawler of the present disclosure uses the rubber-metal composite of the present disclosure described above.

With the above configuration, excellent rubber-metal adhesiveness can be realized even if no cobalt salt is contained.

The tire of the present disclosure uses the rubber-metal composite of the present disclosure described above.

With the above configuration, excellent rubber-metal adhesiveness can be realized even if no cobalt salt is contained.

### (Advantageous Effect)

According to the present disclosure, it is possible to provide a rubber composition having excellent adhesiveness to a metal member even if no cobalt salt is contained.

Further, according to the present disclosure, it is possible to provide a rubber-metal composite, a conveyor belt, a hose, a crawler and a tire having excellent rubber-metal adhesiveness even if no cobalt salt is contained.

### DETAILED DESCRIPTION

The following describes embodiments of the present disclosure. It should be noted that these descriptions are illustrative purposes only and shall not be construed as limiting the present disclosure. Two or more embodiments may be arbitrarily combined in the present disclosure.

### <Rubber composition>

The rubber composition of the present disclosure is a rubber composition containing a rubber component, a rubber-metal adhesion promoter containing Bi, and an organic acid salt of metal other than Bi.

In the rubber composition of the present disclosure, a content of metal element other than Bi with respect to a content of Bi element (content of metal element other than Bi/content of Bi element) is more than 14 and 100 or less in terms of molar ratio, a content of the rubber-metal adhesion promoter is more than 1.5 parts by mass with respect to 100 parts by mass of the rubber component, and the amount of substance of metal element other than Bi contained in the organic acid salt of metal other than Bi in the rubber composition is 0.01 mol or more.

We have conducted extensive research on technologies that can realize excellent adhesiveness without containing cobalt salts in a rubber composition adhering to a metal member such as a steel cord. As a result, it is possible to obtain extremely excellent adhesiveness to a metal member in the present disclosure by, in addition to a rubber-metal adhesion promoter containing bismuth, containing a specific amount of an organic acid salt of metal other than bismuth and optimizing the content of the organic acid salt of metal other than Bi with respect to the content of Bi element and by a combined effect of the rubber-metal adhesion promoter and the organic acid salt of metal other than Bi including zinc organic acid.

In the rubber composition, the content of metal element other than Bi with respect to the content of Bi element is more than 14 and 100 or less in terms of molar ratio. The reason is as follows. When the content of metal element other than Bi/the content of Bi element is 14 or less, the content of the metal other than Bi is smaller than the content of Bi, so that the combined effect cannot be sufficiently obtained. On the other hand, when the content of metal element other than Bi/the content of Bi element exceeds 100, the content of Bi is small, so that the effect of promoting adhesiveness to a metal member cannot be obtained. Therefore, sufficient adhesiveness to metal cannot be obtained in either case.

From the same viewpoint, the content of metal element other than Bi with respect to the content of Bi element in the rubber composition is preferably 27 to 38 in terms of molar ratio.

Note that the content of Bi element and the content of metal element other than Bi in the rubber composition are a total content of Bi element and a total content of metal element other than Bi obtained from all the components contained in the rubber composition. Therefore, when Bi and a metal other than Bi are contained in the components other than the rubber-metal adhesion promoter and the compound of metal other than Bi, they are total contents including the contents of these Bi and metal other than Bi.

The following exemplifies and describes the components of the rubber composition of the present disclosure.

### (Rubber component)

The rubber composition of the present disclosure contains a rubber component.

The rubber component is not particularly limited, and a rubber component conventionally used in a rubber composition can be used. Examples of the rubber component include natural rubber (NR), isoprene rubber (IR), butadiene rubber (BR), styrene butadiene rubber (SBR), styrene isoprene butadiene rubber (SIBR), ethylene propylene diene rubber (EPDM), acrylonitrile butadiene rubber (NBR), chloroprene rubber (CR), butyl rubber (IIR), and modified products thereof. These rubber components may be used alone or in combination of two or more.

From the viewpoints of easy elongation and crystallization and excellent breaking resistance, the rubber component preferably contains at least natural rubber in the rubber composition for tread among the above components.

The content of the natural rubber in the rubber component is not particularly limited, but it is preferably 10 mass% or more and more preferably 20 mass% or more.

From the viewpoints of excellent breaking resistance and processability, the rubber component preferably contains the natural rubber and the styrene butadiene rubber. The balance between the formability and workability and the strength of the rubber composition can be improved by containing these rubbers.

Further, the rubber component may contain butadiene rubber in addition to the natural rubber and the styrene butadiene rubber.

### (Rubber-metal adhesion promoter)

The rubber composition of the present disclosure contains a rubber-metal adhesion promoter containing Bi, in addition to the rubber component described above.

The adhesiveness to a metal member can be significantly improved by using a rubber-metal adhesion promoter containing Bi as the rubber-metal adhesion promoter together with a metal salt of organic acid of metal other than Bi, which will be described later.

As used herein, the rubber-metal adhesion promoter is not particularly limited if it contains Bi. However, from the viewpoint of obtaining better adhesiveness to a metal member, it preferably contains at least one selected from (1) a Bi salt of an aliphatic carboxylic acid having 2 to 25 carbon atoms and (2) a compound represented by the following formula (A),

[(RCOO)ₓBiO]₃Z (A)

where (RCOO) is a residue of an aliphatic carboxylic acid having 2 to 25 carbon atoms, x is an integer of (valence of M - 1), and Z is a structure selected from the following formulae (z-1) to (z-4).

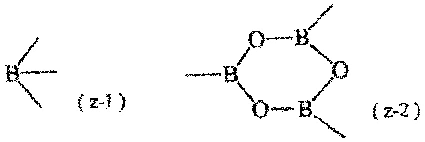

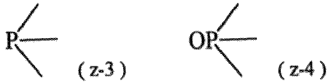

In the rubber composition of the present disclosure, the amount of substance of Bi element contained in the rubber composition is preferably 0.005 mol or more and less than 0.02 mol.

When the amount of substance of Bi element contained in the rubber composition is 0.005 mol or more, excellent adhesiveness to a metal member can be realized. From the same viewpoint, the amount of substance of Bi element contained in the rubber composition is more preferably more than 0.007 mol and still more preferably 0.01 mol or more. On the other hand, when the amount of substance of Bi element contained in the rubber composition is less than 0.02 mol, it is possible to suppress deterioration of adhesiveness to a metal member due to excessive addition.

Note that the amount of substance of Bi element in the rubber composition is a total amount of bismuth metal obtained from all the components contained in the rubber composition. Therefore, when the Bi element is contained in the components other than the rubber-metal adhesion promoter, it is a total amount including the amount of substance of these Bi.

As used herein, the (1) Bi salt of an aliphatic carboxylic acid having 2 to 25 carbon atoms (hereinafter, it may be simply referred to as "(1) Bi salt of carboxylic acid") is a metal salt formed by a chemical reaction between an aliphatic carboxylic acid having 2 to 25 carbon atoms and Bi. By using the Bi salt of carboxylic acid as the rubber-metal adhesion promoter, the adhesiveness to a metal member such as a steel cord, particularly the adhesiveness under moist and heat conditions can be enhanced.

The aliphatic carboxylic acid of the (1) Bi salt of carboxylic acid is an aliphatic carboxylic acid having 2 to 25 carbon atoms. The number of carbon atoms of the aliphatic carboxylic acid is 2 or more from the viewpoints of the compatibility between the (1) Bi salt of carboxylic acid and the rubber component and the adhesiveness between the rubber composition and a metal material. Further, from the viewpoints of the ease of synthesis of the (1) Bi salt of carboxylic acid and the adhesiveness between the rubber composition and a metal material, the number of carbon atoms of the aliphatic carboxylic acid is 25 or less. In the present disclosure, the number of carbon atoms of the aliphatic carboxylic acid means the number including carbon atoms of the carboxyl group of the aliphatic carboxylic acid.

The number of carbon atoms of the aliphatic carboxylic acid of the (1) Bi salt of carboxylic acid may be 2 or more, 3 or more, 4 or more, 5 or more, 6 or more, 7 or more, 8 or more, 9 or more, 10 or more, 11 or more, 12 or more, 13 or more, 14 or more, 15 or more, 16 or more, 17 or more, 18 or more, 19 or more, 20 or more, 21 or more, 22 or more, 23 or more, or 24 or more.

Further, the number of carbon atoms of the aliphatic carboxylic acid of the (1) Bi salt of carboxylic acid is 25 or less, 24 or less, 23 or less, 22 or less, 21 or less, 20 or less, 19 or less, 18 or less, 17 or less, 16 or less, 15 or less, 14 or less, 13 or less, 12 or less, 11 or less, 10 or less, 9 or less, 8 or less, 7 or less, 6 or less, 5 or less, 4 or less, or 3 or less.

From the viewpoint of the adhesiveness between the rubber composition and a metal material, the number of carbon atoms of the aliphatic carboxylic acid of the (1) Bi salt of carboxylic acid is preferably 8 to 18.

The aliphatic carboxylic acid having 2 to 25 carbon atoms in the (1) Bi salt of carboxylic acid is not particularly limited, and examples thereof include an aliphatic monocarboxylic acid and an aliphatic dicarboxylic acid.

Examples of the aliphatic monocarboxylic acid include saturated or unsaturated aliphatic monocarboxylic acids.

Examples of the saturated aliphatic monocarboxylic acid include ethanoic acid, propanoic acid, butanoic acid, pentanoic acid, hexanoic acid, 2-ethylhexanoic acid, heptanoic acid, octanoic acid, nonanoic acid, isononanoic acid, decanoic acid, neodecanoic acid, dodecanoic acid, tetradecanoic acid, hexadecanoic acid, heptadecanoic acid, octadecanoic acid, eicosanoic acid, docosanoic acid, tetracosanoic acid, and naphthenic acid.

Examples of the unsaturated aliphatic monocarboxylic acid include 9-hexadecenoic acid, cis-9-octadecenoic acid, 11-octadecenoic acid, cis,cis-9,12-octadecadienoic acid, 9,12,15-octadecatrienoic acid, 6,9,12-octadecatrienoic acid, 9,11,13-octadecatrienoic acid, eicosanoic acid, 8,11-eicosadienoic acid, 5,8,11-eicosatrienoic acid, 5,8,11,14-eicosatetraenoic acid, tung oil acid, flaxseed oil acid, soybean oil acid, resin acid, tall oil fatty acid, rosin acid, abietic acid, neoabietic acid, palustric acid, pimaric acid, and dehydroabietic acid.

Examples of the aliphatic dicarboxylic acid include saturated or unsaturated aliphatic dicarboxylic acids.

Examples of the saturated aliphatic dicarboxylic acid include oxalic acid, malonic acid, succinic acid, glutaric acid, and adipic acid.

Examples of the unsaturated aliphatic dicarboxylic acid include fumaric acid and maleic acid.

The carboxylic acid in the (1) Bi salt of an aliphatic carboxylic acid having 2 to 25 carbon atoms is at least one selected from the group consisting of a saturated monocarboxylic acid and an unsaturated aliphatic monocarboxylic acid, and a saturated aliphatic dicarboxylic acid and an unsaturated aliphatic dicarboxylic acid.

From the viewpoint of obtaining a cured rubber product that hardly affects the sulfur cross-linking of rubber and has little adverse effect on the physical properties of rubber when used for tires, belt conveyors and the like, the carboxylic acid in the (1) Bi salt of an aliphatic carboxylic acid having 2 to 25 carbon atoms is preferably a saturated aliphatic monocarboxylic acid among the above. Further, it is more preferably a saturated aliphatic monocarboxylic acid having 2 to 20 carbon atoms among the above saturated aliphatic monocarboxylic acids, and it is particularly preferably 2-ethylhexanoic acid, neodecanoic acid, hexadecanoic acid, or octadecanoic acid.

Examples of the (1) Bi salt of an aliphatic carboxylic acid having 2 to 25 carbon atoms include Bi 2-ethylhexanoate, Bi neodecanoate, Bi hexadecanoate, and Bi octadecanoate.

A method for obtaining the (1) Bi salt of carboxylic acid is not particularly limited, and it may be produced or purchased.

Examples of the method for producing the (1) Bi salt of carboxylic acid include the following production method 1 and production method 2.

Production method 1: method where an aliphatic carboxylic acid having 2 to 25 carbon atoms is directly reacted with at least one selected from Bi oxide (b-1), Bi hydroxide (b-2) and Bi carbonate (b-3).

In the production method 1, the reaction temperature for reacting the aliphatic carboxylic acid having 2 to 25 carbon atoms with the Bi compounds (b-1) to (b-3) may be about 50 °C to 150 °C, and the reaction time may be about 1 to 20 hours.

Production method 2: method where an aliphatic carboxylic acid having 2 to 25 carbon atoms is reacted with sodium hydroxide in the presence of water to obtain a sodium salt of the aliphatic carboxylic acid, and then the sodium salt of the aliphatic carboxylic acid is reacted with at least one selected from Bi sulfate (c-1), Bi chloride (c-2) and Bi nitrate (c-3).

In the production method 2, the reaction temperature for reacting the aliphatic carboxylic acid having 2 to 25 carbon atoms with the sodium hydroxide in the presence of an organic solvent may be about 20 °C to 100 °C, and the reaction time may be about 1 to 5 hours. Further, in the production method 2, the reaction temperature for reacting the sodium salt of the aliphatic carboxylic acid with the Bi compounds (c-1) to (c-3) may be about 20 °C to 100 °C, and the reaction time may be about 1 to 5 hours.

Furthermore, in the production method 2, the above-described (1) Bi salt of carboxylic acid can be obtained by reacting the sodium salt of the aliphatic carboxylic acid with the Bi compounds (c-1) to (c-3), then separating an aqueous layer in the reaction system, and then removing the solvent existing in an oil layer by distillation under reduced pressure.

The (2) compound has a structure represented by the formula (A): [(RCOO)ₓBiO]₃Z. The adhesiveness to a metal member such as a steel cord can be enhanced by using the (2) compound represented by the formula (A) as the rubber-metal adhesion promoter.

In the (2) compound represented by the formula (A), (RCOO) is a residue of an aliphatic carboxylic acid having 2 to 25 carbon atoms. From the viewpoints of the compatibility between the compound represented by the formula (A) and the rubber component and the adhesiveness between the rubber composition and a metal material, the number of carbon atoms of the aliphatic carboxylic acid in the residue of the aliphatic carboxylic acid is 2 or more. Further, from the viewpoints of the ease of synthesis of the compound represented by the formula (A) and the adhesiveness between the rubber composition and a metal material, the number of carbon atoms of the aliphatic carboxylic acid in the residue of the aliphatic carboxylic acid is 25 or less.

Note that the number of carbon atoms of the aliphatic carboxylic acid means the number including carbon atoms of the carboxyl group of the aliphatic carboxylic acid.

The aliphatic carboxylic acid having 2 to 25 carbon atoms of (RCOO) in the (2) compound represented by the formula (A) is the same as the aliphatic carboxylic acid of the above-described (1) Bi salt of an aliphatic carboxylic acid having 2 to 25 carbon atoms. Further, each embodiment described in the aliphatic carboxylic acid of the (1) Bi salt of carboxylic acid can also be applied to the aliphatic carboxylic acid having 2 to 25 carbon atoms forming the residue (RCOO).

In the (2) compound represented by the formula (A), (RCOO) is preferably a residue of a saturated aliphatic monocarboxylic acid having 2 to 20 carbon atoms, and it is more preferably a residue of 2-ethylhexanoic acid, a residue of neodecanoic acid, a residue of hexadecanoic acid, or a residue of octadecanoic acid.

In this way, it is possible to obtain a cured rubber product that hardly affects the sulfur cross-linking of rubber and has little adverse effect on the physical properties of rubber when used for tires, belt conveyors and the like.

In the (2) compound represented by the formula (A), x is an integer of (valence of M - 1).

In the (2) compound represented by the formula (A), Z is a structure selected from the following formulae (z-1) to (z-4).

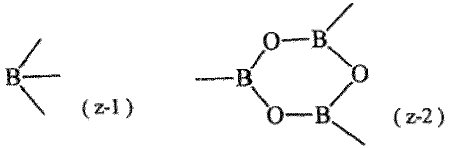

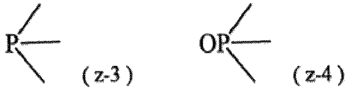

Among the four structures of the above formulae (z-1) to (z-4), the structure represented by the formula (z-1) is preferable from the viewpoint of obtaining high adhesiveness between the rubber composition and a metal material.

Examples of the (2) compound represented by the formula (A) include boron Bi 2-ethylhexanoate, boron Bi neodecanoate, boron Bi hexadecanoate, and boron Bi octadecanoate. These compounds may be used alone or in combination of two or more.

A method for obtaining the (2) compound represented by the formula (A) is not particularly limited.

For example, it can be produced with a method of mixing and heating an aliphatic carboxylic acid having 2 to 25 carbon atoms, any of borate ester of lower alcohol having 1 to 5 carbon atoms (d-1), metaborate ester of lower alcohol having 1 to 5 carbon atoms (d-2), phosphate ester of lower alcohol having 1 to 5 carbon atoms (d-3) and phosphite ester of lower alcohol with 1 to 5 carbon atoms (d-4), an acid (e) capable of forming a volatile ester with the lower alcohol residue having 1 to 5 carbon atoms present in the esters (d-1) to (d-4), and a Bi compound (f) which is a metal source, and removing the resulting volatile ester.

Examples of the borate ester of lower alcohol (d-1) include trimethyl borate, triethyl borate, tripropyl borate, and tributyl borate. Examples of the metaborate ester of lower alcohol (d-2) include trimethyl metaborate, triethyl metaborate, tripropyl metaborate, and tributyl metaborate. Examples of the phosphate ester of lower alcohol (d-3) include methyl phosphate, ethyl phosphate, propyl phosphate, and butyl phosphate. Examples of the phosphite ester of lower alcohol (d-4) include methyl phosphite, ethyl phosphite, propyl phosphite, and butyl phosphite.

Further, the above-mentioned Bi oxide (b-1), Bi hydroxide (b-2), Bi carbonate (b-3) and the like may be used as the Bi compound (f) which is a metal source, for example.

Furthermore, examples of the acid (e) include ethanoic acid, propanoic acid, and butanoic acid.

The proportion of the Bi compound (f) as a metal source used is, for example, 20 parts by mass to 100 parts by mass per 100 parts by mass of an aliphatic carboxylic acid having 2 to 25 carbon atoms (a). The proportion of the (d) used is, for example, 10 parts by mass to 50 parts by mass per 100 parts by mass of an aliphatic carboxylic acid having 2 to 25 carbon atoms (a). The proportion of the acid (e) used is, for example, 10 parts by mass to 50 parts by mass per 100 parts by mass of an aliphatic carboxylic acid having 2 to 25 carbon atoms (a).

Among the methods for obtaining the (2) compound represented by the formula (A), a production method including a first step where an aliphatic carboxylic acid having 2 to 25 carbon atoms (a), an acid (e) capable of forming a volatile ester with the lower alcohol residue having 1 to 5 carbon atoms present in the ester (d), and a Bi compound (f) are mixed and heated to obtain a reaction product, and then a second step where, after removing water from the reaction system containing the reaction product, the esters (d-1) to (d-4) are added to the reaction system from which the water has been removed, and the reaction product is reacted with the esters (d-1) to (d-4) is preferable because it is possible to prevent hydrolysis of the esters (d-1) to (d-4) caused by water formed in the first step, and as a result, the (2) compound represented by the formula (A) can be efficiently produced.

In the above production method, the temperature at which the aliphatic carboxylic acid having 2 to 25 carbon atoms (a), the esters (d-1) to (d-4), the acid (e), and the Bi compound (f) are reacted may be, for example, 100 °C to 250 °C and is preferably 150 °C to 220 °C. The reaction time may be, for example, 1 to 20 hours and is preferably 1 to 5 hours.

From the viewpoint of obtaining better adhesiveness to a metal member, the content of the rubber-metal adhesion promoter in the rubber composition of the present disclosure needs to be more than 1.5 parts by mass with respect to 100 parts by mass of the rubber component. From the same viewpoint, the content of the rubber-metal adhesion promoter is preferably 2.0 parts by mass or more, more preferably 3.5 parts by mass or more, still more preferably 4.6 parts by mass or more, and particularly preferably 6.0 parts by mass or more with respect to 100 parts by mass of the rubber component. Further, because an excess amount of the rubber-metal adhesion promoter causes a decrease in adhesiveness, the content of the rubber-metal adhesion promoter is preferably 25 parts by mass or less, more preferably 16 parts by mass or less, and particularly preferably 10 parts by mass or less with respect to 100 parts by mass of the rubber component.

### (Organic acid salt of metal other than Bi)

The rubber composition of the present disclosure further contains an organic acid salt of metal other than Bi, in addition to the rubber component and the rubber-metal adhesion promoter described above.

By containing an organic acid salt of metal other than Bi in the rubber composition, the adhesiveness to a metal member can be significantly improved by a combined effect with the rubber-metal adhesion promoter described above.

In the rubber composition of the present disclosure, the amount of substance of metal element other than Bi contained in the organic acid salt of metal other than Bi in the rubber composition needs to be 0.01 mol or more.

When the amount of substance of metal element other than Bi contained in the organic acid salt of metal other than Bi is 0.01 mol or more, excellent adhesiveness to a metal member can be realized. From the same viewpoint, the amount of substance of metal element other than Bi contained in the rubber composition is preferably 0.02 mol or more. On the other hand, the amount of substance of Bi element contained in the rubber composition is preferably 0.04 mol or less because deterioration of the adhesiveness to a metal member due to excessive addition can be suppressed.

The amount of substance of metal element other than Bi in the rubber composition is a total amount of metal other than Bi contained in the organic acid salt of metal other than Bi. Therefore, when a plurality of organic acid salts of metal other than Bi are contained, it is a total amount of these metals contained therein. Note that zinc dimethacrylate is not included in the "organic acid salt of metal other than Bi" in the present disclosure. Further, when the metal element is contained as a component other than the organic acid salt (such as zinc white), the substance amount of this metal element is not included.

The organic acid salt of metal other than Bi is a metal salt formed by a chemical reaction between a metal other than Bi and an organic acid.

The metal of the organic acid salt of metal other than Bi is not particularly limited if it is a metal other than Bi. From the viewpoint of further enhancing the adhesiveness between the rubber composition and a metal member, it is preferable to use at least one selected from the group consisting of Zn, Al, Mo, Fe, Ti and Cu as the metal, and it is more preferable to use at least one selected from the group consisting of Zn, Al, and Mo.

Examples of the organic acid used for the organic acid salt of metal other than Bi include carboxylic acid and sulfonic acid, where carboxylic acid is preferred.

Further, the carboxylic acid is preferably an aliphatic carboxylic acid, and more preferably an aliphatic carboxylic acid having 2 to 25 carbon atoms. From the viewpoint of adhesiveness between the rubber composition and a metal material, the number of carbon atoms of the aliphatic carboxylic acid is 2 or more. Further, from the viewpoints of the ease of synthesis of metal salt of the carboxylic acid and the adhesiveness between the rubber composition and a metal material, the number of carbon atoms of the aliphatic carboxylic acid is 25 or less. The number of carbon atoms of the aliphatic carboxylic acid means the number including carbon atoms of the carboxyl group of the aliphatic carboxylic acid.

The number of carbon atoms of the aliphatic carboxylic acid used for the organic acid salt of metal other than Bi may be 2 or more, 3 or more, 4 or more, 5 or more, 6 or more, 7 or more, 8 or more, 9 or more, 10 or more, 11 or more, 12 or more, 13 or more, 14 or more, 15 or more, 16 or more, 17 or more, 18 or more, 19 or more, 20 or more, 21 or more, 22 or more, 23 or more, or 24 or more.

Further, the number of carbon atoms of the aliphatic carboxylic acid of the (1) Bi salt of carboxylic acid is 25 or less, 24 or less, 23 or less, 22 or less, 21 or less, 20 or less, 19 or less, 18 or less, 17 or less, 16 or less, 15 or less, 14 or less, 13 or less, 12 or less, 11 or less, 10 or less, 9 or less, 8 or less, 7 or less, 6 or less, 5 or less, 4 or less, or 3 or less.

The aliphatic carboxylic acid used for the organic acid salt of metal other than Bi is not particularly limited, and examples thereof include an aliphatic monocarboxylic acid and an aliphatic dicarboxylic acid.

Examples of the aliphatic monocarboxylic acid include saturated or unsaturated aliphatic monocarboxylic acids.

Examples of the saturated aliphatic monocarboxylic acid include ethanoic acid, propanoic acid, butanoic acid, pentanoic acid, hexanoic acid, 2-ethylhexanoic acid, heptanoic acid, octanoic acid, nonanoic acid, isononanoic acid, decanoic acid, neodecanoic acid, dodecanoic acid, tetradecanoic acid, hexadecanoic acid, heptadecanoic acid, octadecanoic acid, eicosanoic acid, docosanoic acid, tetracosanoic acid, and naphthenic acid.

Examples of the unsaturated aliphatic monocarboxylic acid include methacrylic acid, 9-hexadecenoic acid, cis-9-octadecenoic acid, 11-octadecenoic acid, cis,cis-9,12-octadecadienoic acid, 9,12,15-octadecatrienoic acid, 6,9,12-octadecatrienoic acid, 9,11,13-octadecatrienoic acid, eicosanoic acid, 8,11-eicosadienoic acid, 5,8,11-eicosatrienoic acid, 5,8,11,14-eicosatetraenoic acid, tung oil acid, flaxseed oil acid, soybean oil acid, resin acid, tall oil fatty acid, rosin acid, abietic acid, neoabietic acid, palustric acid, pimaric acid, and dehydroabietic acid.

Examples of the aliphatic dicarboxylic acid include saturated or unsaturated aliphatic dicarboxylic acids.

Examples of the saturated aliphatic dicarboxylic acid include oxalic acid, malonic acid, succinic acid, glutaric acid, and adipic acid.

Examples of the unsaturated aliphatic dicarboxylic acid include dimethacrylic acid, fumaric acid and maleic acid.

From the viewpoint of obtaining a cured rubber product that hardly affects the sulfur cross-linking of rubber and has little adverse effect on the physical properties of rubber when used for tires, belt conveyors and the like, the aliphatic carboxylic acid used for the organic acid salt of metal other than Bi is preferably an aliphatic carboxylic acid having 2 to 20 carbon atoms among the above, and it is particularly preferably 2-ethylhexanoic acid, neodecanoic acid, hexadecanoic acid, octadecanoic acid, or dimethacrylic acid.

Examples of the organic acid salt of metal other than Bi include zinc 2-ethylhexanoate, aluminum 2-ethylhexanoate, molybdenum 2-ethylhexanoate, iron 2-ethylhexanoate, copper 2-ethylhexanoate, zinc neodecanoate, aluminum neodecanoate, molybdenum neodecanoate, iron neodecanoate, copper neodecanoate, zinc hexadecanoate, aluminum hexadecanoate, molybdenum hexadecanoate, iron hexadecanoate, copper hexadecanoate, zinc octadecanoate, aluminum octadecanoate, molybdenum octadecanoate, iron octadecanoate, copper octadecanoate, zinc dimethacrylate, aluminum dimethacrylate, molybdenum dimethacrylate, iron dimethacrylate, and copper dimethacrylate.

A method for obtaining the organic acid salt of metal other than Bi is not particularly limited, and it may be produced or purchased.

Examples of the method for producing the organic acid salt of metal other than Bi include the production method 1 and production method 2 of the (1) Bi salt of carboxylic acid described above.

The content of the organic acid salt of metal other than Bi in the rubber composition of the present disclosure is not particularly limited. For example, from the viewpoint of obtaining better adhesiveness to a metal member, it is preferably 0.05 parts by mass or more, more preferably 3 parts by mass or more, still more preferably 7.5 parts by mass or more, and particularly preferably 10 parts by mass or more with respect to 100 parts by mass of the rubber component. Further, from the viewpoint of suppressing deterioration of the rubber composition, the content of the organic acid salt of metal other than Bi is preferably 15 parts by mass or less with respect to 100 parts by mass of the rubber component.

### (Filler)

The rubber composition of the present disclosure may contain a filler such as carbon black or silica in addition to the above-described rubber component, rubber-metal adhesion promoter containing Bi, and zinc compound.

The reinforcing properties of the rubber composition can be enhanced by containing the filler.

The type of the carbon black is not particularly limited. For example, any hard carbon produced with an oil-furnace method may be used. The type of the carbon black is not particularly limited, and at least one of carbon blacks of GPF, FEF, SRF, HAF, ISAF, IISAF, and SAF grades may be used, for example.

When carbon black is contained as the filler, the content thereof is preferably 20 parts by mass to 100 parts by mass, more preferably 30 parts by mass to 90 parts by mass, and particularly preferably 40 parts by mass to 80 parts by mass with respect to 100 parts by mass of the rubber component. When the content of the carbon black is 20 parts by mass or more with respect to 100 parts by mass of the rubber component, the rubber composition can obtain better reinforcing properties. When the content of the carbon black is 100 parts by mass or less with respect to 100 parts by mass of the rubber component, deterioration of low heat generating properties and deterioration of gripping force can be suppressed.

The type of the silica is not particularly limited, and examples thereof include wet silica (hydrous silicic acid), dry silica (silicic anhydride), calcium silicate, and aluminum silicate, among which wet silica is preferably used.

The BET specific surface area (measured according to ISO 5794/1) of the wet silica is preferably 40 m²/g to 350 m²/g. Silica having a BET specific surface area in this range has an advantage that it can achieve both the rubber reinforcing properties and the dispersibility in the rubber component. From this viewpoint, silica having a BET specific surface area of 80 m²/g to 300 m²/g is more preferable. Commercially available products such as "Nipsil AQ" and "Nipsil KQ" manufactured by Tosoh Silica Corporation and "Ultrasil VN3" manufactured by Evonik Industries AG can be used as the silica, for example. The silica may be used alone or in combination of two or more.

When silica is contained as the filler, the content thereof is preferably 0.1 parts by mass to 40 parts by mass, more preferably 1 part by mass to 30 parts by mass, and particularly preferably 5 parts by mass to 20 parts by mass with respect to 100 parts by mass of the rubber component. When the content of the carbon black is 20 parts by mass or more with respect to 100 parts by mass of the rubber component, the rubber composition can obtain better reinforcing properties. When the content of the carbon black is 100 parts by mass or less with respect to 100 parts by mass of the rubber component, deterioration of low heat generating properties and deterioration of gripping force can be suppressed.

Examples of a filler other than the carbon black and the silica include aluminum hydroxide, clay, alumina, talc, mica, kaolin, glass balloon, glass beads, calcium carbonate, magnesium carbonate, magnesium hydroxide, magnesium oxide, titanium oxide, potassium titanate, and barium sulfate.

### (Other components)

In addition to the above-described rubber component, rubber-metal adhesion promoter containing Bi, organic acid salt of metal other than Bi, and filler as an optional component, the rubber composition of the present disclosure may appropriately contain known additives to be blended in a rubber composition.

Examples of such additives include a zinc compound, a resin, a vulcanizing agent (cross-linking agent), a vulcanization accelerator, a vulcanization retarder, an age resistor, a reinforcing agent, a vulcanizing coagent, a coloring agent, a flame retardant, a lubricant, a foaming agent, a plasticizer, a processing aid, an antioxidant, an anti-scorch agent, an ultraviolet rays protecting agent, an antistatic agent, a color protecting agent, and an oil. These components may be used alone or in combination of two or more.

The rubber composition of the present disclosure can further contain a zinc compound which is not an organic acid salt. In this case, the adhesiveness of the rubber composition to a metal member can be further enhanced.

The zinc compound is a compound excluding those corresponding to the above-described organic acid salt of Zn, which is a metal other than Bi, among compounds containing zinc. Examples thereof include zinc metal alone, zinc white, and zinc dimethacrylate.

When the zinc compound is contained, a total content of the zinc compound and the organic acid salt of Zn is preferably 17 parts by mass or more and 30 parts by mass or less with respect to 100 parts by mass of the rubber component.

By containing the resin, the flexibility of the rubber can be enhanced, and the adhesiveness of the rubber composition to a metal member can be further improved.

The resin is not particularly limited, and various natural resins and synthetic resins may be used.

From the viewpoint of further improving the adhesiveness of the rubber composition to a metal member, it is preferable to use at least one selected from the group consisting of a petroleum-based resin, a coal-based resin, a phenol-based resin, a rosin-based resin and a terpene-based resin, and it is more preferable to use a phenol-based resin.

The phenol-based resin may use alkyl phenols such as phenol, naphthol, cresol, xylenol, p-tert-butylphenol, p-octylphenol, and p-nonylphenol. These compounds having a hydroxyl group may be used alone or in combination of two or more. It is preferable to contain at least phenol or β-naphthol among these compounds.

When the phenol-based is used, a melamine derivative may be further used as a curing agent, and examples thereof include hexamethylol melamine, hexamethoxymethyl melamine, pentamethoxymethylol melamine, hexaethoxymethyl melamine, hexakis-(methoxymethyl) melamine, N,N',N"-trimethyl-N,N',N"-trimethylol melamine, N,N',N"-trimethylol melamine, N-methylol melamine, N,N'-(methoxymethyl) melamine, and N,N',N"-tributyl-N,N',N"-trimethylol melamine. It is preferable to use hexamethoxymethyl melamine among these melamine derivatives.

From the viewpoint of complying with environmentally friendly regulations, the rubber composition of the present disclosure has no cobalt added. Specifically, the content of cobalt compound is preferably 0.01 parts by mass or less with respect to 100 parts by mass of the rubber component, and it is more preferable to contain no cobalt compound except for inevitable impurities.

A method for preparing the rubber composition of the present disclosure is not particularly limited, and a known method may be used.

For example, it may be obtained by adding a rubber component, a rubber-metal adhesion promoter, a zinc compound, and any other optional components at the same time or in an arbitrary order and kneading the components using a kneader such as a Banbury mixer, a roll, or an internal mixer.

The use of the rubber composition of the present disclosure is not particularly limited. For example, it can be used for any rubber article such as a hose, a conveyor belt, a crawler, a tire, and a sole.

### <Rubber-metal composite >

The rubber-metal composite of the present disclosure includes the rubber composition of the present disclosure described above and a metal member.

By including the rubber composition of the present disclosure, the rubber-metal composite of the present disclosure obtains excellent rubber-metal adhesiveness.

In the rubber-metal composite of the present disclosure, the rubber composition of the present disclosure described above is in contact with the metal member. For example, a part or all of a metal wire, which is a metal member, may be covered with the rubber composition, or a rubber layer made of a rubber composition may be laminated on at least one side of a layer made of a metal wire.

The metal member is a component made of metal, and it can have various forms such as a metal wire, a metal spring, a metal plate, and a metal ring, for example.

The metal type of the metal member is not particularly limited, and steel, iron, copper, gold, or the like may be appropriately selected depending on the intended purpose.

The metal member may or may not be plated. The type of plating is not particularly limited, and known plating such as brass plating, zinc plating, chrome plating, and nickel plating can be appropriately adopted.

When the metal member is a metal wire, it is preferably plated with at least one selected from the group consisting of brass plating and zinc plating and more preferably galvanized. This can provide better rubber-metal adhesiveness.

A method for producing the rubber-metal composite of the present disclosure is not particularly limited, and a known method may be appropriately adopted. For example, a composite in which a metal wire is covered with a rubber composition can be obtained by vulcanizing the rubber composition with the rubber composition covering the metal wire. Further, a composite in which a rubber layer made of a rubber composition is laminated on at least one side of a layer made of a metal wire, for example, can be obtained with the method for producing a laminated body described in WO/2017/056414, for example.

### (Conveyor belt)

The conveyor belt of the present disclosure uses the rubber-metal composite of the present disclosure described above. This provides rubber-metal adhesiveness equal to or higher than that of a case of using a rubber composition containing a cobalt salt.

The conveyor belt of the present disclosure is not particularly limited except that any of the above rubber compositions or composites is used, and known conveyor belt structures and production methods may be adopted.

In one embodiment, the rubber-metal composite of the present disclosure can be used in the conveyor belt for at least a surface rubber (bottom cover rubber) on the inner peripheral side that comes into contact with a driving pulley, driven pulley, shape retaining roller or the like under a metal reinforcing material (metal 1) made of steel cord or the like. It can also be used for a surface rubber (top cover rubber) on the outer peripheral side that comes into contact with a transported article on the upper side of a metal reinforcing material.

### (Hose)

The hose of the present disclosure uses the rubber-metal composite of the present disclosure described above. This provides rubber-metal adhesiveness equal to or higher than that of a case of using a rubber composition containing a cobalt salt.

The hose of the present disclosure is not particularly limited except that any of the above rubber compositions or composites is used, and known hose structures and production methods may be adopted.

In one embodiment, the hose includes an inner rubber layer (inner tube rubber) located on the inner side in the radial direction, an outer rubber layer located on the outer side in the radial direction, and a metal reinforcing layer located between the inner rubber layer and the outer rubber layer. Further, in one embodiment, the above-mentioned rubber composition for rubber can be used for at least one of the inner rubber layer and the outer rubber layer.

### <Crawler>

The crawler of the present disclosure uses the rubber-metal composite of the present disclosure described above. This provides rubber-metal adhesiveness equal to or higher than that of a case of using a rubber composition containing a cobalt salt.

The crawler of the present disclosure is not particularly limited except that any of the above rubber compositions or composites is used, and known crawler structures and production methods may be adopted.

In one embodiment, the crawler includes a steel cord, an intermediate rubber layer covering the steel cord, a core metal arranged on the intermediate rubber layer, and a main body rubber layer surrounding the intermediate rubber layer and the core metal. Further, it has a plurality of lugs on the side of the main body rubber layer that contacts the ground. The above-mentioned rubber composition for rubber may be used for any part of the rubber crawler.

### <Tire>

The tire of the present disclosure uses the rubber-metal composite of the present disclosure described above. This provides rubber-metal adhesiveness equal to or higher than that of a case of using a rubber composition containing a cobalt salt.

The tire of the present disclosure is not particularly limited except that the rubber-metal composite of the present disclosure described above is used, and known tire structures and production methods may be adopted.

The application site of the metal-rubber composite of the present disclosure in a tire is not particularly limited, and it may be appropriately selected depending on the intended purpose. Examples thereof include carcass, belt and bead core.

The tire may be manufactured with a conventional method. For example, members used in normal tire manufacturing such as a carcass and a belt made of unvulcanized rubber composition and metal cord (metal-rubber composite), a tread made of unvulcanized rubber composition and the like are sequentially laminated on a tire-forming drum, and the drum is removed to obtain a green tire. Next, a desired tire (for example, a pneumatic tire) can be manufactured by heating and vulcanizing the green tire with a conventional method.

### EXAMPLES

The present disclosure will be described in more detail based on Examples, which are illustrative purposes only and shall not be construed as limiting the scope of the present disclosure. In the examples, the blending amount is in parts by mass unless otherwise specified.

### (Examples 1 to 5, Comparative Examples 1 to 9, and Reference Example)

Kneading was performed using a normal Banbury mixer with the compositions listed in Tables 1 and 2 to obtain each sample of rubber composition.

### (Evaluation)

The following evaluations were performed on each of the obtained samples of rubber composition. The evaluation results are listed in Table 2.

### (1) Preparation of test piece

A galvanized steel cord having a diameter of 0.39 mm was sandwiched between sheets of 1 mm of the rubber composition obtained with the composition listed in Table 1, and vulcanization was performed under pressure at 155 °C for 30 minutes to obtain a test piece.

### (2) Rubber-metal adhesiveness (pulling force, rubber coverage)

The galvanized steel cord was pulled out from the test piece prepared in (1) above, and the pulling force (N) and the rubber coverage (%) were measured. The conditions for the pulling test were in accordance with DIN 22131.

The rubber coverage was calculated as a ratio (%) of an area covered by rubber remaining on the surface of the steel cord after pulling with respect to the surface area of the galvanized steel cord. The evaluation results are indicated as index values with the pulling force and the coverage of a sample of Reference Example (a cobalt-containing sample) being 100, respectively. The larger the value is, the larger the adhesive force is, the better the result is.

**Table 1**

| Composition | Blending amount (part by mass with respect to 100 of rubber component) |
|---|---|
| Natural rubber *1 | 30 |
| Styrene butadiene rubber *2 | 70 |
| CB 1 *3 | 30 |
| CB 2 *4 | 25 |
| Oil *5 | 5 |
| Age resistor *6 | 2 |
| Zinc white *7 | 10 |
| Zinc dimethacrylate *8 | 1.5 |
| Modified phenol resin *9 | 3 |
| β-naphthol * 10 | 2 |
| HMMM *11 | 4.9 |
| Organic acid salt of metal | Listed in Table 2 |
| Sulfur | 3 |
| Vulcanization accelerator *16 | 0.6 |

**Table 2**

| | | Comparative Example 1 | Comparative Example 2 | Example 1 | Example 2 | Comparative Example 3 | Example 3 | Example 4 | Example 5 | Comparative Example 4 | Comparative Example 5 | Comparative Example 6 | Comparative Example 7 | Comparative Example 8 | Comparative Example 9 | Reference Example |
|---|---|---|---|---|---|---|---|---|---|---|---|---|---|---|---|---|
| Blending amount of organic acid salt of metal (part by mass with respect to 100 of rubber component) | Cobalt organic acid *12 | - | - | - | - | - | - | - | - | - | - | - | - | - | - | 3.6 |
| | Bismuth organic acid *13 | 6.6 | - | 8.5 | 8.5 | 7.8 | 6.2 | 4.5 | 3.1 | 1.5 | 1.9 | 0.7 | 15.6 | 23.4 | 7.8 | - |
| | Zinc organic acid *14 | - | 3.6 | 10.3 | - | - | 7.5 | 10.1 | 10.7 | 11.3 | 0.1 | 3.2 | 5.9 | 3.0 | 3.0 | - |
| | Molybdenum organic acid *15 | - | - | - | 28 | - | - | - | - | - | - | - | - | - | - | - |
| Amount of substance of bismuth element (mol) | | 0.0100 | - | 0.0100 | 0.0100 | 0.0100 | 0.0086 | 0.0067 | 0.0040 | 0.0020 | 0.0026 | 0.0010 | 0.0216 | 0.0300 | 0.0100 | - |
| Amount of substance of metal other than bismuth contained in organic acid salt of metal (mol) | | - | 0.0100 | 0.0300 | 0.0300 | - | 0.0214 | 0.0333 | 0.0360 | 0.0380 | 0.0003 | 0.0090 | 0.0168 | 0.0100 | 0.0100 | - |
| Total content of zinc compound and zinc organic acid (part by mass with respect to 100 of rubber component) | | 11.5 | 15.1 | 21.8 | 11.5 | 11.5 | 19.0 | 21.6 | 22.2 | 22.8 | 11.6 | 14.7 | 17.4 | 14.5 | 14.5 | 11.5 |
| Content of metal element other than bismuth/ content of bismuth element (molar ratio) | | 13 | - | 15 | 15 | 15 | 19 | 27 | 38 | 79 | 51 | 139 | 8 | 5 | 14 | - |
| Evaluation | Metal wire pulling force | 27 | 5 | 94 | 45 | 51 | 88 | 73 | 71 | 45 | 40 | 31 | 55 | 32 | 58 | 100 |
| | Rubber coverage | 0 | 0 | 110 | 25 | 0 | 99 | 39 | 44 | 11 | 0 | 0 | 3 | 1 | 3 | 100 |

| | | | | | | | | | | | | | | | | |
|---|---|---|---|---|---|---|---|---|---|---|---|---|---|---|---|---|
| *1: RSS #3 (classified according to International Standards of Quality and Packing for Natural Rubber Grades) *2: "JSR 1500", manufactured by JSR Corporation *3: GPF-grade carbon black, "Asahi #55", manufactured by Asahi Carbon Co., Ltd., DBP absorption amount: 87 cm³/100 g, nitrogen adsorption specific surface area: 26 m²/g *4: HAF-grade carbon black, "Asahi #70L", manufactured by Asahi Carbon Co., Ltd., DBP absorption amount: 75 cm³/100 g, nitrogen adsorption specific surface area: 84 m²/g *5: A/O MIX, manufactured by SANKYO YUKA KOGYO K.K. *6: N-phenyl-N'-(1,3-dimethylbutyl)-p-phenylenediamine, "NOCRAC 6C", manufactured by Ouchi Shinko Chemical Industrial Co., Ltd. *7: Product name "No. 3 Zinc White", manufactured by Hakusui Tech Co., Ltd. *8: Zinc dimethacrylate: "ACTOR ZMA", manufactured by Kawaguchi Chemical Industry Co.,Ltd. *9: "SUMILITERESIN PR-12687", manufactured by Sumitomo Bakelite Co., Ltd. *10: "β-Naphthol", manufactured by Mitsui Fine Chemicals,Inc *11: Hexamethoxymethyl melamine, "CYREZ964RPC", manufactured by Nippon Cytec Industry Co., Ltd. *12: A complex salt in which a part of an organic acid in a cobalt salt of the organic acid had been replaced with boric acid, "MANOBOND C 22.5", manufactured by OM Group Inc., cobalt content: 22.5 mass% *13: Bismuth 2-ethylhexanoate, bismuth content: 27.2 mass% *14: Zinc 2-ethylhexanoate, zinc content: 22.1 mass% *15: Molybdenum 2-ethylhexanoate, molybdenum: 10.0 mass% *16: N-cyclohexyl-2-benzothiazolyl sulfenamide, product name "NOCCELER CZ-G", manufactured by Ouchi Shinko Chemical Industrial Co., Ltd. | | | | | | | | | | | | | | | | |

As can be seen from the results in Table 2, even when no cobalt salt, which has been conventionally used as an adhesion promoter, was contained, the samples of Examples 1 to 5, in which the steel cord was covered with a rubber composition containing a rubber-metal adhesion promoter and an organic acid salt of metal other than Bi, had good effects in both terms of the rubber adhesion after pulling the metal wire out and the pulling force of the metal wire as compared with samples of Comparative Examples 1 and 2, in which the rubber composition only contained a rubber-metal adhesion promoter.

### INDUSTRIAL APPLICABILITY

According to the present disclosure, it is possible to provide a rubber composition having excellent adhesiveness to a metal member even if no cobalt salt is contained.

Further, according to the present disclosure, it is possible to provide a rubber-metal composite, a conveyor belt, a hose, a crawler, and a tire having excellent rubber-metal adhesiveness even if no cobalt salt is contained.

## Claims

1. A rubber composition, comprising a rubber component, a rubber-metal adhesion promoter containing Bi, and an organic acid salt of metal other than Bi, wherein
a content of metal element other than Bi with respect to a content of Bi element, which is expressed as content of metal element other than Bi/content of Bi element, in the rubber composition is more than 14 and 100 or less in terms of molar ratio, and
a content of the rubber-metal adhesion promoter is more than 1.5 parts by mass with respect to 100 parts by mass of the rubber component, and the amount of substance of metal element other than Bi contained in the organic acid salt of metal other than Bi in the rubber composition is 0.01 mol or more.

2. The rubber composition according to claim 1, wherein the rubber-metal adhesion promoter contains at least one selected from (1) a Bi salt of an aliphatic carboxylic acid having 2 to 25 carbon atoms and (2) a compound represented by the following formula (A),
[(RCOO)ₓBiO]₃Z (A)
where (RCOO) is a residue of an aliphatic carboxylic acid having 2 to 25 carbon atoms, x is an integer of (valence of M - 1), and Z is a structure selected from the following formulae (z-1) to (z-4).

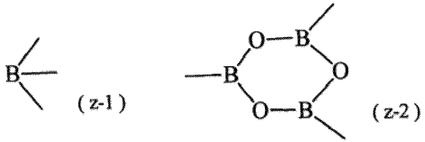

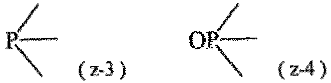

3. The rubber composition according to claim 1 or 2, wherein the metal other than Bi is at least one selected from the group consisting of Zn, Al, Mo, Fe, Ti, and Cu.

4. The rubber composition according to claim 3, wherein the metal other than Bi is Zn.

5. The rubber composition according to any one of claims 1 to 4, wherein a content of the organic acid salt of metal other than Bi is 0.05 parts by mass or more and 15 parts by mass or less with respect to 100 parts by mass of the rubber component.

6. The rubber composition according to claim 4, wherein the organic acid salt of metal other than Bi is at least one selected from zinc 2-ethylhexanoate and zinc dimethacrylate.

7. The rubber composition according to any one of claims 1 to 6, wherein the amount of substance of the Bi element in the rubber composition is more than 0.007 mol and less than 0.02 mol.

8. The rubber composition according to any one of claims 1 to 7, wherein a content of the rubber-metal adhesion promoter is more than 1.5 parts by mass and 25 parts by mass or less with respect to 100 parts by mass of the rubber component.

9. The rubber composition according to claim 4, further comprising a zinc compound that is not an organic acid salt, wherein a total content of the zinc compound and the organic acid salt of Zn is 17 parts by mass or more and 30 parts by mass or less with respect to 100 parts by mass of the rubber component.

10. The rubber composition according to claim 2, wherein the carboxylic acid in the (1) Bi salt of an aliphatic carboxylic acid having 2 to 25 carbon atoms is an aliphatic monocarboxylic acid or an aliphatic dicarboxylic acid.

11. The rubber composition according to claim 10, wherein the carboxylic acid in the (1) Bi salt of an aliphatic carboxylic acid having 2 to 25 carbon atoms is a saturated aliphatic monocarboxylic acid having 2 to 20 carbon atoms.

12. The rubber composition according to claim 11, wherein the carboxylic acid in the (1) Bi salt of an aliphatic carboxylic acid having 2 to 25 carbon atoms is 2-ethylhexanoic acid, neodecanoic acid, or octadecanoic acid.

13. The rubber composition according to claim 2, wherein Z in the (2) compound represented by the formula (A) has the structure of the formula (z-1).

14. The rubber composition according to claim 2, wherein (RCOO) in the (2) compound represented by the formula (A) is a residue of a saturated aliphatic monocarboxylic acid having 2 to 20 carbon atoms.

15. The rubber composition according to claim 14, wherein (RCOO) in the (2) compound represented by the formula (A) is a residue of 2-ethylhexanoic acid, a residue of neodecanoic acid, a residue of hexadecanoic acid, or a residue of octadecanoic acid.

16. A rubber-metal composite, comprising the rubber composition according to any one of claims 1 to 15 and a metal member.

17. The rubber-metal composite according to claim 16, wherein the metal member is galvanized.

18. A conveyor, using the rubber-metal composite according to claim 16 or 17.

19. A hose, using the rubber-metal composite according to claim 16 or 17.

20. A crawler, using the rubber-metal composite according to claim 16 or 17.

21. A tire, using the rubber-metal composite according to claim 16 or 17.

## Patentansprüche

1. Kautschukzusammensetzung, umfassend eine Kautschukkomponente, einen Kautschuk-Metall-Haftvermittler, enthaltend Bi, und ein organisches Säuresalz eines Metalls, bei dem es sich nicht um Bi handelt, wobei
ein Gehalt eines Metallelements, bei dem es sich nicht um Bi handelt, im Verhältnis zu einem Gehalt eines Bi-Elements, der als Gehalt eines Metallelements, bei dem es sich nicht um Bi/Gehalt eines Bi-Elements handelt, ausgedrückt ist, in der Kautschukzusammensetzung mehr als 14 und 100 oder weniger in Bezug auf ein Molverhältnis beträgt, und
ein Gehalt des Kautschuk-Metall-Haftvermittlers mehr als 1,5 Massenteile im Verhältnis zu 100 Massenteilen der Kautschukkomponente beträgt, und die Menge einer Substanz eines Metallelements, bei dem es sich nicht um Bi handelt, die in dem organischen Säuresalz eines Metalls, bei dem es sich nicht um Bi handelt, enthalten ist, in der Kautschukzusammensetzung 0,01 Mol oder mehr beträgt.

2. Kautschukzusammensetzung nach Anspruch 1, wobei der Kautschuk-Metall-Haftvermittler mindestens eines enthält, das aus (1) einem Bi-Salz einer aliphatischen Carbonsäure mit 2 bis 25 Kohlenstoffatomen und (2) einer Verbindung, die durch die folgende Formel (A) dargestellt ist, ausgewählt ist,
[(RCOO)ₓBiO]₃Z (A),
worin (RCOO) ein Rest einer aliphatischen Carbonsäure mit 2 bis 25 Kohlenstoffatomen ist, x eine ganze Zahl von (Wertigkeit von M - 1) ist und Z eine Struktur ist, die aus den folgenden Formeln (z-1) bis (z-4) ausgewählt ist:

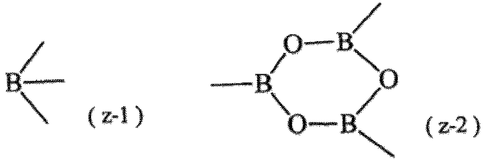

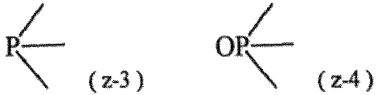

3. Kautschukzusammensetzung nach Anspruch 1 oder 2, wobei das Metall, bei dem es sich nicht um Bi handelt, mindestens eines ist, das aus der Gruppe bestehend aus Zn, Al, Mo, Fe, Ti und Cu ausgewählt ist.

4. Kautschukzusammensetzung nach Anspruch 3, wobei das Metall, bei dem es sich nicht um Bi handelt, Zn ist.

5. Kautschukzusammensetzung nach einem der Ansprüche 1 bis 4, wobei ein Gehalt des organischen Säuresalzes eines Metalls, bei dem es sich nicht um Bi handelt, 0,05 Massenteil oder mehr und 15 Massenteile oder weniger im Verhältnis zu 100 Massenteilen der Kautschukkomponente beträgt.

6. Kautschukzusammensetzung nach Anspruch 4, wobei das organische Säuresalz eines Metalls, bei dem es sich nicht um Bi handelt, mindestens eines ist, das aus Zink-2-ethylhexanoat und Zinkdimethacrylat ausgewählt ist.

7. Kautschukzusammensetzung nach einem der Ansprüche 1 bis 6, wobei die Menge einer Substanz des Bi-Elements in der Kautschukzusammensetzung mehr als 0,007 Mol und weniger als 0,02 Mol beträgt.

8. Kautschukzusammensetzung nach einem der Ansprüche 1 bis 7, wobei ein Gehalt des Kautschuk-Metall-Haftvermittlers mehr als 1,5 Massenteile und 25 Massenteile oder weniger im Verhältnis zu 100 Massenteilen der Kautschukkomponente beträgt.

9. Kautschukzusammensetzung nach Anspruch 4, ferner umfassend eine Zinkverbindung, die kein organisches Säuresalz ist, wobei ein Gesamtgehalt der Zinkverbindung und des organischen Zn-Säuresalzes 17 Massenteile oder mehr und 30 Massenteile oder weniger im Verhältnis zu 100 Massenteilen der Kautschukkomponente beträgt.

10. Kautschukzusammensetzung nach Anspruch 2, wobei die Carbonsäure in dem (1) Bi-Salz einer aliphatischen Carbonsäure mit 2 bis 25 Kohlenstoffatomen eine aliphatische Monocarbonsäure oder eine aliphatische Dicarbonsäure ist.

11. Kautschukzusammensetzung nach Anspruch 10, wobei die Carbonsäure in dem (1) Bi-Salz einer aliphatischen Carbonsäure mit 2 bis 25 Kohlenstoffatomen eine gesättigte aliphatische Monocarbonsäure mit 2 bis 20 Kohlenstoffatomen ist.

12. Kautschukzusammensetzung nach Anspruch 11, wobei die Carbonsäure in dem (1) Bi-Salz einer aliphatischen Carbonsäure mit 2 bis 25 Kohlenstoffatomen 2-Ethylhexansäure, Neodecansäure oder Octadecansäure ist.

13. Kautschukzusammensetzung nach Anspruch 2, wobei Z in der (2) Verbindung, die durch die Formel (A) dargestellt ist, die Struktur der Formel (z-1) aufweist.

14. Kautschukzusammensetzung nach Anspruch 2, wobei (RCOO) in der (2) Verbindung, die durch die Formel (A) dargestellt ist, ein Rest einer gesättigten aliphatischen Monocarbonsäure mit 2 bis 20 Kohlenstoffatomen ist.

15. Kautschukzusammensetzung nach Anspruch 14, wobei (RCOO) in der (2) Verbindung, die durch die Formel (A) dargestellt ist, ein Rest von 2-Ethylhexansäure, ein Rest von Neodecansäure, ein Rest von Hexadecansäure oder ein Rest von Octadecansäure ist.

16. Kautschuk-Metall-Verbundstoff, umfassend die Kautschukzusammensetzung nach einem der Ansprüche 1 bis 15 und ein Metallelement.

17. Kautschuk-Metall-Verbundstoff nach Anspruch 16, wobei das Metallelement galvanisiert ist.

18. Förderer unter Verwendung des Kautschuk-Metall-Verbundstoffs nach Anspruch 16 oder 17.

19. Schlauch unter Verwendung des Kautschuk-Metall-Verbundstoffs nach Anspruch 16 oder 17.

20. Raupenkette unter Verwendung des Kautschuk-Metall-Verbundstoffs nach Anspruch 16 oder 17.

21. Reifen unter Verwendung des Kautschuk-Metall-Verbundstoffs nach Anspruch 16 oder 17.

## Revendications

1. Composition de caoutchouc, comprenant un composant caoutchouc, un promoteur d'adhésion caoutchouc-métal contenant du Bi, et un sel d'acide organique de métal autre que le Bi, dans laquelle
une teneur en élément métallique autre que le Bi par rapport à une teneur en élément Bi, exprimée en tant que teneur en élément métallique autre que le Bi/teneur en élément Bi, dans la composition de caoutchouc est supérieure à 14 et inférieure ou égale à 100 en rapport molaire, et
une teneur en promoteur d'adhésion caoutchouc-métal est supérieure à 1,5 partie en masse par rapport à 100 parties en masse du composant caoutchouc, et la quantité de substance de l'élément métallique autre que le Bi contenu dans le sel d'acide organique de métal autre que le Bi dans la composition de caoutchouc est de 0,01 mole ou plus.

2. Composition de caoutchouc selon la revendication 1, dans laquelle le promoteur d'adhésion caoutchouc-métal contient au moins un choisi parmi (1) un sel de Bi d'un acide carboxylique aliphatique ayant 2 à 25 atomes de carbone et (2) un composé représenté par la formule suivante (A),
[(RCOO)ₓBiO]₃Z (A)
où (RCOO) est un résidu d'un acide carboxylique aliphatique ayant 2 à 25 atomes de carbone, x est un nombre entier de (valence de M - 1) et Z est une structure choisie parmi les formules suivantes (z-1) à (z-4) ;

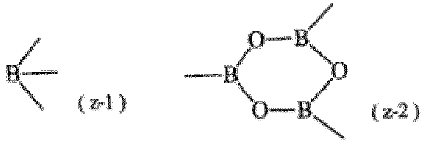

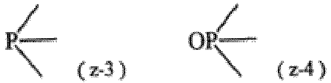

3. Composition de caoutchouc selon la revendication 1 ou 2, dans laquelle le métal autre que le Bi est au moins un métal choisi dans le groupe constitué par Zn, Al, Mo, Fe, Ti et Cu.

4. Composition de caoutchouc selon la revendication 3, dans laquelle le métal autre que le Bi est le Zn.

5. Composition de caoutchouc selon l'une quelconque des revendications 1 à 4, dans laquelle une teneur en sel d'acide organique de métal autre que le Bi est de 0,05 partie en masse ou plus et de 15 parties en masse ou moins par rapport à 100 parties en masse du composant caoutchouc.

6. Composition de caoutchouc selon la revendication 4, dans laquelle le sel d'acide organique de métal autre que le Bi est au moins un sel choisi parmi le 2-éthylhexanoate de zinc et le diméthacrylate de zinc.

7. Composition de caoutchouc selon l'une quelconque des revendications 1 à 6, dans laquelle la quantité de substance de l'élément Bi dans la composition de caoutchouc est supérieure à 0,007 mole et inférieure à 0,02 mole.

8. Composition de caoutchouc selon l'une quelconque des revendications 1 à 7, dans laquelle une teneur en promoteur d'adhésion caoutchouc-métal est supérieure à 1,5 partie en masse et inférieure ou égale à 25 parties en masse par rapport à 100 parties en masse du composant caoutchouc.

9. Composition de caoutchouc selon la revendication 4, comprenant en outre un composé de zinc qui n'est pas un sel d'acide organique, une teneur totale en composé de zinc et en sel d'acide organique de Zn étant de 17 parties en masse ou plus et de 30 parties en masse ou moins par rapport à 100 parties en masse du composant caoutchouc.

10. Composition de caoutchouc selon la revendication 2, dans laquelle l'acide carboxylique dans le sel (1) de Bi d'un acide carboxylique aliphatique ayant 2 à 25 atomes de carbone est un acide monocarboxylique aliphatique ou un acide dicarboxylique aliphatique.

11. Composition de caoutchouc selon la revendication 10, dans laquelle l'acide carboxylique dans le sel (1) de Bi d'un acide carboxylique aliphatique ayant 2 à 25 atomes de carbone est un acide monocarboxylique aliphatique saturé ayant 2 à 20 atomes de carbone.

12. Composition de caoutchouc selon la revendication 11, dans laquelle l'acide carboxylique dans le sel (1) de Bi d'un acide carboxylique aliphatique ayant 2 à 25 atomes de carbone est l'acide 2-éthylhexanoïque, l'acide néodécanoïque ou l'acide octadécanoïque.

13. Composition de caoutchouc selon la revendication 2, dans laquelle Z, dans le composé (2) représenté par la formule (A), présente la structure de la formule (z-1).

14. Composition de caoutchouc selon la revendication 2, dans laquelle (RCOO), dans le composé (2) représenté par la formule (A), est un résidu d'un acide monocarboxylique aliphatique saturé ayant 2 à 20 atomes de carbone.

15. Composition de caoutchouc selon la revendication 14, dans laquelle (RCOO), dans le composé (2) représenté par la formule (A), est un résidu d'acide 2-éthylhexanoïque, un résidu d'acide néodécanoïque, un résidu d'acide hexadécanoïque ou un résidu d'acide octadécanoïque.

16. Composite caoutchouc-métal, comprenant la composition de caoutchouc selon l'une quelconque des revendications 1 à 15 et un élément métallique.

17. Composite caoutchouc-métal selon la revendication 16, dans lequel l'élément métallique est galvanisé.

18. Transporteur utilisant le composite caoutchouc-métal selon la revendication 16 ou 17.

19. Tuyau souple utilisant le composite caoutchouc-métal selon la revendication 16 ou 17.

20. Chenille utilisant le composite caoutchouc-métal selon la revendication 16 ou 17.

21. Pneumatique utilisant le composite caoutchouc-métal selon la revendication 16 ou 17.
